# FASCICULE DE BREVET EUROPEEN

(11) **EP 1 902 948 B1**
(45) Date de publication et mention de la délivrance du brevet: **24.08.2016**
(21) Numéro de dépôt: 07115947.9
(22) Date de dépôt: 07.09.2007
(51) Int. Cl.: B64C 27/00, F02C 7/24, F02K 1/36, F02K 1/38, F02K 1/82

(54) **Moteur d'hélicoptère à turbine à gaz à émission sonore réduite par traitement acoustique d'un éjecteur**
Hubschraubermotor mit Gasturbine mit reduzierter Schallemission mittels Schalldämmungsbehandlung eines Ejektors
Gas turbine helicopter engine with reduced sound emissions due to acoustic treatment of a jet pump

(30) Priorité: 20.09.2006 FR 0653834
(43) Date de publication de la demande: 26.03.2008
(73) Titulaire: TURBOMECA, Société dite:, F-64511 Bordes (FR)
(72) Inventeur: Baude, Pierre, 64800, Nay (FR); Jouanchicot, Didier, 64230, Lescar (FR)
(74) Mandataire: Boura, Olivier

(56) Documents cités:
- EP-A1- 1 010 884
- FR-A- 2 873 167
- GB-A- 865 838
- GB-A- 2 044 359

## Description

### Arrière-plan de l'invention

L'invention concerne les moteurs d'hélicoptère à turbine à gaz. En conséquence des efforts accomplis pour diminuer le bruit engendré par la rotation des pales de rotors d'hélicoptères, la déposante a constaté que le bruit propre des moteurs à turbine à gaz devient une composante significative de l'émission sonore globale des hélicoptères.

Une réduction supplémentaire notable de cette émission sonore pourrait donc être obtenue en insonorisant les moteurs à turbine à gaz eux-mêmes.

A cet effet, il est proposé dans le document EP 1 010 884 de munir les parois d'une tuyère multicanal recevant les gaz issus de la turbine d'un revêtement capable d'absorber de l'énergie acoustique. Au regard des fréquences sonores à atténuer, le revêtement est relativement épais, ce qui est pénalisant en terme de masse, d'autant que le revêtement doit être en un matériau capable de supporter la température du flux primaire en sortie de turbine. En outre, l'épaisseur du revêtement ne saurait permettre au flux gazeux issu de la turbine d'assurer une aspiration efficace d'un éventuel flux secondaire de refroidissement de compartiment moteur à travers un passage entourant la tuyère, de sorte que le traitement acoustique de la tuyère n'est pas compatible avec une fonction d'éjecteur.

Un moteur d'hélicoptère est également connu par le document GB 2 044 359.

### Objet et résumé de l'invention

La présente invention vise à éviter les inconvénients précités et propose à cet effet un moteur d'hélicoptère à turbine à gaz ayant une chambre de combustion, au moins une turbine disposée en aval de la chambre de combustion pour recevoir des gaz de combustion émis par celle-ci, et une tuyère avec un diffuseur raccordé en aval de la turbine et recevant un flux primaire issu de celle-ci et un éjecteur qui a une partie amont entourant l'extrémité aval du diffuseur en ménageant avec cette extrémité un passage de sortie d'un flux secondaire d'air de refroidissement de compartiment moteur et qui se prolonge vers l'aval au-delà de l'extrémité aval du diffuseur, l'éjecteur ayant une paroi formée au moins partiellement par un atténuateur acoustique propre à atténuer des fréquences sonores engendrées par la ou chaque turbine ou par la chambre de combustion.

Dans un moteur d'hélicoptère à turbine à gaz, la vitesse d'éjection des gaz issus de la turbine est réduite autant que possible pour optimiser la transformation de l'énergie des gaz en énergie mécanique. L'émission sonore en sortie de tuyère est donc essentiellement due aux éléments rotatifs du moteur, en particulier à la bu chaque turbine qui est l'élément rotatif le plus proche ainsi qu'à la chambre de combustion. La réalisation de la paroi de l'éjecteur pour former atténuateur acoustique efficace dans une plage de fréquences sonores engendrées par la rotation de la ou chaque turbine et/ou par la chambre de combustion permet donc une réduction efficace du bruit tout en bénéficiant du courant de flux secondaire qui protège la paroi de l'éjecteur vis-à-vis des gaz chauds issus de la turbine.

L'atténuateur acoustique peut alors être réalisé en un matériau métallique léger par exemple à base de titane, c'est-à-dire en titane ou en un alliage de titane, de sorte que la présence de l'atténuateur n'est pas pénalisante en terme de masse. En outre, au niveau de l'éjecteur, il y a de l'espace disponible pour réaliser l'atténuateur acoustique sous forme par exemple d'un résonateur de Helmholtz de plusieurs cm d'épaisseur propre à atténuer des fréquences de quelques centaines de Hz à quelques kHz engendrées par la rotation de la ou chaque turbine et par la chambre de combustion, et ce sans pénaliser la fonction d'éjecteur.

On peut noter ici que le problème de l'insonorisation en sortie de turbine à gaz pour moteur d'hélicoptère est complètement différent de celui de l'insonorisation en sortie de turbine à gaz pour moteur d'avion. En effet, avec un moteur d'avion à turbine à gaz on cherche à produire de la poussée, donc à éjecter une masse importante de gaz à une vitesse élevée. Le bruit engendré est essentiellement un bruit de jet de gaz contre lequel un atténuateur acoustique en paroi de canal d'écoulement n'aurait pas d'effet.

### Brève description des dessins

L'invention sera mieux comprise à la lecture de la description faite ci-après, à titre indicatif mais non limitatif, en référence aux dessins annexés sur lesquels :
- la figure 1 est une vue schématique d'un moteur d'hélicoptère à turbine à gaz ;
- la figure 2 est une vue partielle montrant un ensemble diffuseur-éjecteur d'un moteur d'hélicoptère, selon un mode de réalisation de l'invention.

### Description détaillée de modes de réalisation

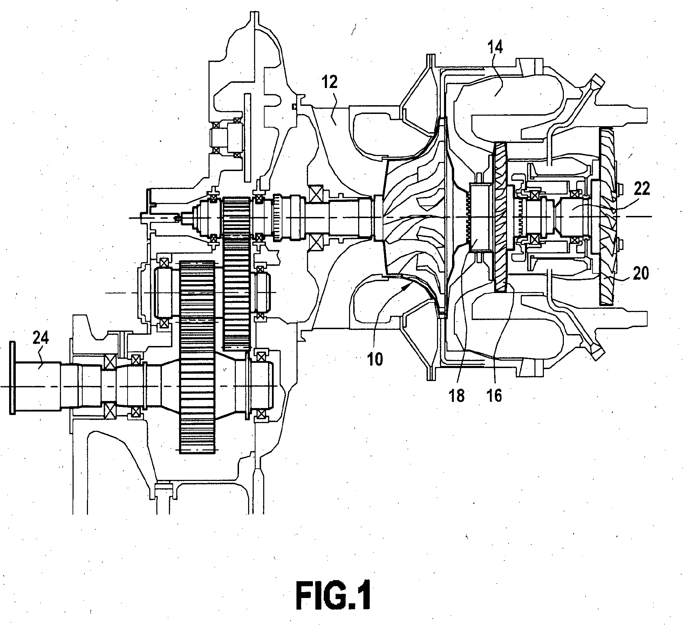

La figure 1 montre de façon schématique un moteur d'hélicoptère à turbine à gaz comprenant un étage de compresseur 10 (par exemple compresseur centrifuge) recevant de l'air extérieur par un conduit annulaire d'entrée d'air 12, une chambre de combustion annulaire 14 (par exemple à flux inversé) munie d'injecteurs (non représentés) alimentés en carburant et en flux d'air primaire issu du compresseur, une turbine 16 d'entraînement du compresseur 10 reliée à celui-ci par un arbre 18 et une turbine de puissance 20 (par exemple à un seul étage) reliée par un arbre 22 à un train d'engrenages fournissant une puissance mécanique sur un arbre de sortie 24, les arbres 18 et 22 étant coaxiaux.

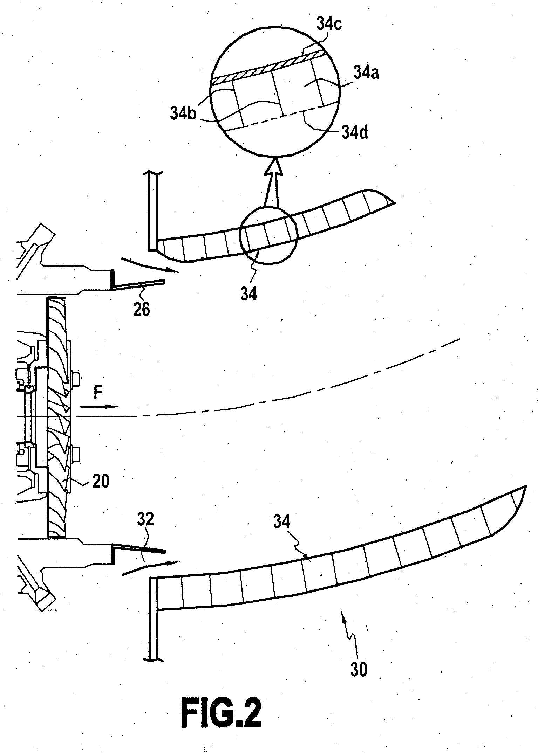

En direction aval, c'est-à-dire dans le sens (flèche F) d'écoulement des gaz issus de la chambre de combustion, la turbine de puissance 20 est prolongée par une tuyère qui comprend un diffuseur 26 et un éjecteur 30, comme montré sur la figure 2.

Le diffuseur 26 reçoit le flux gazeux primaire chaud issu de la turbine de puissance 20 et contribue avec l'éjecteur 30 à ralentir ce flux pour faire en sorte que l'énergie des gaz passant dans la turbine 16 soit au maximum convertie en énergie mécanique transmise sur l'arbre de sortie. De façon connue, l'éjecteur est coudé au moins à son extrémité aval pour éviter que le flux gazeux sortant soit dirigé dans l'axe du moteur, vers l'arrière de l'hélicoptère.

A sa partie d'extrémité amont, l'éjecteur 30 est fixé au carter (non représenté) du moteur et entoure l'extrémité aval du diffuseur 26 en ménageant avec celle-ci un intervalle annulaire 32. Un flux d'air secondaire "froid", utilisé notamment pour le refroidissement d'équipements situés dans le compartiment moteur, s'écoule autour de l'ensemble chambre de combustion, turbines 16,20 et diffuseur 26.

Le diffuseur a une forme droite et non une forme dite «en marguerite » qui est utilisée lorsque l'on cherche à favoriser le mélange des flux primaire et secondaire. Ainsi, le flux secondaire s'échappe à travers l'intervalle 32 en s'écoulant le long de la face interne de l'éjecteur 30. L'extraction du flux secondaire est assistée par l'effet d'aspiration produit par le flux primaire en sortie du diffuseur.

Du côté interne, l'éjecteur présente une paroi formée par un atténuateur acoustique 34 sur au moins une partie de la longueur axiale de l'éjecteur. L'atténuateur 34 peut être formé de plusieurs parties adjacentes successives pour plus de commodité de fabrication.

Comme le montre le détail de la figure 2, l'atténuateur acoustique peut être formé par un ensemble de cavités ou cellules adjacentes 34a séparées par des parois 34b formant par exemple une structure en nid d'abeilles. Les parois 34b s'étendent perpendiculairement à la surface de l'éjecteur entre un fond 34c formé par une plaque ou feuille rigide étanche (non traversée par les ondes sonores) et une face avant 34d formée par une plaque ou feuille laissant passer les ondes sonores. La plaque ou feuille avant 34d est par exemple perforée. On pourrait aussi utiliser une plaque ou feuille poreuse perméable aux ondes sonores à atténuer.

La profondeur des cavités 34a (distance entre le fond et la face avant) est choisie en fonction de la longueur d'onde des ondes sonores à atténuer. Ces dernières, produites essentiellement par les turbines 16 et 20 ou la chambre de combustion 14, ont une fréquence de quelques centaines de Hz à quelques kHz, ce qui implique une profondeur de cavité (quart de longueur d'onde) de plusieurs centimètres.

Du fait que l'éjecteur, du côté interne, est balayé par le flux secondaire "froid", le matériau constitutif de l'atténuateur acoustique peut être choisi dans une assez large gamme de matériaux, donc notamment en des matériaux légers. Un exemple de matériau utilisable est le titane. D'autres matériaux métalliques ou non métalliques pourront bien entendu être choisis.

Pour avoir une atténuation la plus efficace possible, il est souhaitable que l'atténuateur s'étende sur toute la longueur de l'éjecteur et que cette longueur soit privilégiée par rapport à celle du diffuseur. On pourra choisir un rapport au moins égal à 1 entre la longueur axiale de l'éjecteur et celle du diffuseur.

Bien que l'on ait décrit plus haut une structure d'atténuateur du type connu sous le nom d'atténuateur d'Helmholtz, d'autres types d'atténuateurs sonores peuvent être utilisés tels que, par exemple des mousses ou des matériaux poreux céramiques ou métalliques.

## Revendications

1. Moteur d'hélicoptère à turbine à gaz ayant une chambre de combustion (14), au moins une turbine (16, 20) disposée en aval de la chambre de combustion pour recevoir des gaz de combustion émis par celle-ci, et une tuyère avec un diffuseur (26) raccordé en aval de la turbine et recevant un flux primaire issu de celle-ci et un éjecteur (30) qui a une partie amont entourant l'extrémité aval du diffuseur en ménageant avec cette extrémité un passage de sortie (32) d'un flux secondaire d'air de refroidissement de compartiment moteur et qui se prolonge vers l'aval au-delà de l'extrémité aval du diffuseur, **caractérisé en ce que** l'éjecteur a une paroi formée au moins partiellement par un atténuateur acoustique (34) propre à atténuer des fréquences sonores engendrées par la rotation de la ou chaque turbine (16, 20) et/ou par la chambre de combustion (14).

2. Moteur d'hélicoptère selon la revendication 1, dans lequel l'atténuateur acoustique (34) est formé par une structure de résonateur de Helmholtz.

3. Moteur d'hélicoptère selon l'une quelconque des revendications 1 et 2, **caractérisé en ce que** l'atténuateur acoustique (34) est une structure en un matériau métallique à base de titane.

4. Moteur d'hélicoptère selon l'une quelconque des revendications 1 à 3, **caractérisé en ce que** le rapport entre les longueurs axiales de l'éjecteur (30) et du diffuseur (26) est au moins égal à 1.

## Patentansprüche

1. Helikopter-Gasturbinentriebwerk mit einer Brennkammer (14), wenigstens einer Turbine (16, 20), die der Brennkammer nachgeordnet ist, um durch diese abgegebene Verbrennungsgase aufzunehmen, sowie einer Düse mit einem Diffusor (26), der stromab der Turbine angeschlossen ist und einen aus dieser ausgetretenen Primärstrom aufnimmt, und einem Ejektor (30), der einen stromaufwärtigen Teil umfasst, welcher das stromabwärtige Ende des Diffusors umgibt und dabei mit diesem Ende einen Durchgang für den Austritt (32) eines sekundären Motorraum-Kühlluftstroms ausspart, und der sich in stromabwärtiger Richtung jenseits des stromabwärtigen Endes des Diffusors fortsetzt, **dadurch gekennzeichnet, dass** der Ejektor eine Wand aufweist, die wenigstens zum Teil durch einen Schalldämpfer (34) gebildet ist, welcher geeignet ist, Schallfrequenzen, die durch die Rotation der oder jeder Turbine (16, 20) und/oder durch die Brennkammer (14) erzeugt werden, zu dämpfen.

2. Helikopter-Triebwerk nach Anspruch 1, wobei der Schalldämpfer (34) durch eine Helmholtz-Resonator-Struktur gebildet ist.

3. Helikopter-Triebwerk nach einem der Ansprüche 1 und 2, **dadurch gekennzeichnet, dass** der Schalldämpfer (34) eine Struktur aus einem metallischen Werkstoff auf der Basis von Titan besteht.

4. Helikopter-Triebwerk nach einem der Ansprüche 1 bis 3, **dadurch gekennzeichnet, dass** das Verhältnis zwischen den axialen Längen des Ejektors (30) und des Diffusors (26) wenigstens gleich 1 beträgt.

## Claims

1. Helicopter gas turbine engine having a combustion chamber (14), at least one turbine (16, 20) arranged downstream from the combustion chamber to receive combustion gases emitted by the latter and a nozzle, the nozzle having a diffuser (26) connected downstream from the turbine and receiving a primary flow from the latter and an ejector (30) which has an upstream part surrounding the downstream end of the diffuser and defining therewith an outlet passage (32) for an engine compartment cooling air secondary flow, said ejector running in the downstream direction beyond the downstream end of the diffuser, **characterized in that** the ejector has a wall formed at least partially by a sound attenuator (34) calculated to attenuate sound frequencies generated by the rotation of the or each turbine (16 and 20) and/or by the combustion chamber (14).

2. Helicopter engine according to Claim 1, in which the sound attenuator (34) is formed by a Helmholtz resonator structure.

3. Helicopter engine according to either of Claims 1 and 2, **characterized in that** the sound attenuator (34) is a structure made of a titanium based metal material.

4. Helicopter engine according to any one of Claims 1 to 3, **characterized in that** the ratio between the axial lengths of the ejector (30) and of the diffuser (26) is at least 1:1.
